# EUROPEAN PATENT SPECIFICATION

(11) **EP 2 703 145 B1**
(45) Date of publication and mention of the grant of the patent: **13.03.2019**
(21) Application number: 12776057.7
(22) Date of filing: 04.04.2012
(51) Int. Cl.: B29C 49/42, B29B 11/08, B29C 31/08, B29C 45/42, B29C 49/06, B29C 49/64

(54) **PREFORM CONVEYING DEVICE AND PREFORM MANUFACTURING EQUIPMENT**
VORFORMFÖRDERVORRICHTUNG UND VORFORMHERSTELLUNGSANLAGE
DISPOSITIF DE TRANSPORT DE PRÉFORME ET ÉQUIPEMENT DE FABRICATION DE PRÉFORME

(30) Priority: 28.04.2011 JP 2011102452
(43) Date of publication of application: 05.03.2014
(73) Proprietor: Nissei ASB Machine Co., Ltd., Komoro-shi, Nagano 384-8585 (JP)
(72) Inventor: TAKAHASHI, Tsuyoshi, Komoro-shi, Nagano 384-8585 (JP)
(74) Representative: Wunderlich & Heim Patentanwälte Partnerschaftsgesellschaft mbB
(86) International application number: PCT/JP2012/059169
(87) International publication number: WO 2012/147473

(56) References cited:
- WO-A1-2011/051586
- DE-A1- 1 926 479
- DE-U1-202008 003 710
- JP-A- 11 105 108
- JP-A- 61 076 342
- JP-A- 2000 289 098
- JP-A- 2003 181 907
- JP-A- 2004 195 826
- JP-A- 2007 144 630
- JP-A- 2007 507 368
- JP-A- 2010 155 702
- JP-A- 2010 240 749

## Description

### Technical Field

This invention relates to a conveying device for an injection molded preform and preform manufacturing equipment.

### Background Art

A container manufactured by blow molding a preform using polyethylene terephthalate (PET) as a resin is known. The preform is produced by injection molding, and conveyed to a blow molding step after a predetermined cooling step. The preform molded by an injection molding machine is transported by a conveying device to a cooling device, where it is subjected to predetermined cooling (post-cooling), and then discharged by the conveying device.

In conveying the preform, the preform withdrawn from the mold of the injection molding machine is fitted into a pot of a receiving section and once held there, whereafter the preform is conveyed to the cooling device. As a transport mechanism for the preform in the conveying device, a technology is known which comprises conveying the preform while gripping the opening site of the preform by use of a split ring or an air picker type plug (see, for example, Patent Document 1). Moreover, a technology involving direct transport to the cooling device by suction is known (see, for example, Patent Document 2).

Transport of a preform by suction is also known from DE 20 2008 003 710 U1, WO 2011/051586 A1 and DE 1 926 479 A. Thereby a preform is hold and conveyed while sucking the preform to a deformable and elastic sealing portion fixed on the conveying device. The prior art literature provides an apparatus near to the preamble of claim 1.

When the split ring or the air picker type plug is used, the preform cannot be gripped with a sufficient gripping force, depending on the shape of the opening site of the preform, and restrictions are imposed on the shape of the preform which can be conveyed. In order to grip the preform, which has a wide opening, with a sufficient gripping force, in particular, it has been necessary to enlarge the split ring, thereby ensuring a space for an opening or closing action, or to upsize the plug.

With the cooling device of the direct transport type, it has been common practice to provide a holding jig provided with a suction structure as well as a water cooled structure, and this jig concurrently functions as a withdrawing jig. In this case, there is need to perform accurate positioning between several tens of, or as many as 100 or more, injection cores and holding jigs, thus requiring a considerable time for adjustment work. Since a precision complicated device configuration is involved, moreover, high costs have tended to be entailed.

With a vertical injection molding machine having a mold moving upward and downward, on the other hand, the core may fail to play the role of a guide, depending on the shape of the preform, and there may be a situation where the preform cannot be withdrawn in a normal posture. There has been a possibility, therefore, that the preform cannot be fitted appropriately into the pot of the receiving section.

### Prior Art Documents

### Patent Documents

Patent Document 1: JP-A-2010-149460
Patent Document 2: JP-A-63-256413

### Summary of the Invention

### Problems to be solved by the invention

The present invention has been accomplished in the light of the above-mentioned circumstances. It is an object of the present invention to provide a preform conveying device which can appropriately hold a preform having an opening portion whose top surface is flat, and can convey the preform to a predetermined position.

### Means for solving the problems

The above object is achieved according to the invention by the preform conveying device as defined in claim 1. Particular embodiments of the invention are the subject of the dependent claims.

### Effects of the Invention

The preform conveying device of the present invention can appropriately hold the preforms each having the opening with a flat top surface, and convey them to the predetermined position. Since the present invention relies on the technique for transporting the preforms while sucking them under reduced pressure, it can appropriately convey the preforms, whether narrow-mouthed or wide-mouthed, and whether relatively heavy, to the predetermined position, as long as the top surfaces of their openings are flat.

Furthermore, the preform manufacturing equipment of the present invention can be configured as preform manufacturing equipment provided with the preform conveying device which can appropriately hold the preforms each having the opening with a flat top surface, and convey them to the predetermined position.

### Brief Description of the Drawings

[Fig. 1] is a side view of preform manufacturing equipment according to an embodiment of the present invention.
[Fig. 2] is a view taken along the arrowed line II-II in Fig. 1.
[Fig. 3] is a view taken along the arrowed line III-III in Fig. 1.
[Fig. 4] is a detail view of withdrawing pots.
[Fig. 5] is a detail view of cooling pots.
[Fig. 6] is a side view representing the details of a conveying device.
[Fig. 7] is a sectional view representing the details of a moving frame.
[Fig. 8] is a detail view of essential parts in Fig. 7.
[Fig. 9] is an explanation drawing of the operating state of the preform manufacturing equipment.
[Fig. 10] is an explanation drawing of the operating state of the preform manufacturing equipment.
[Fig. 11] is an explanation drawing of the operating state of the preform manufacturing equipment.
[Fig. 12] is an explanation drawing of the operating state of the preform manufacturing equipment.
[Fig. 13] is an explanation drawing of the operating state of the preform manufacturing equipment.
[Fig. 14] is an explanation drawing of the operating state of the preform manufacturing equipment.

### Mode for Carrying Out the Invention

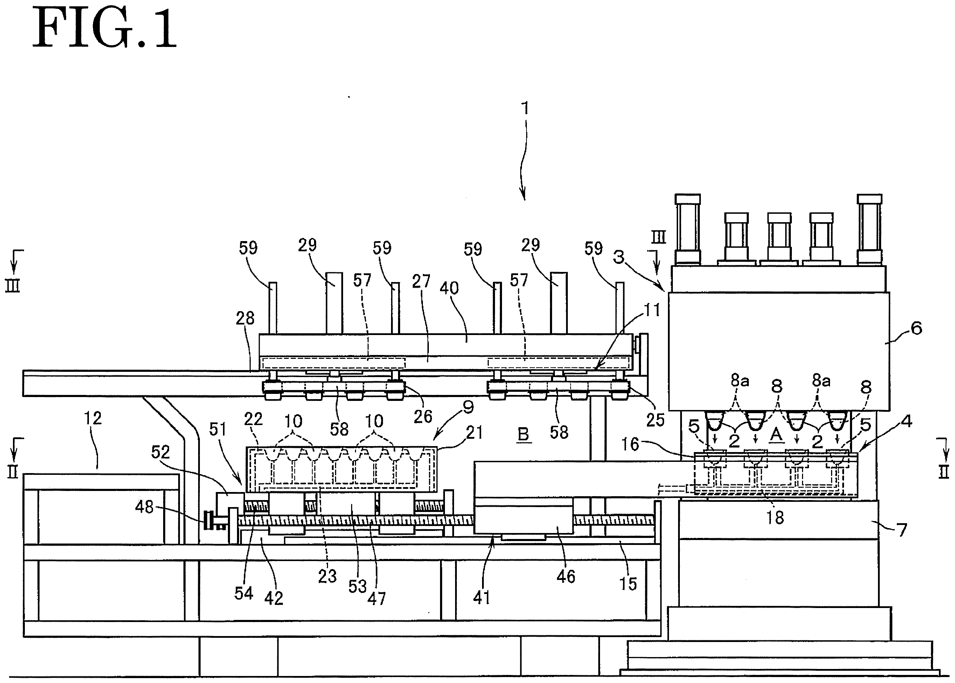

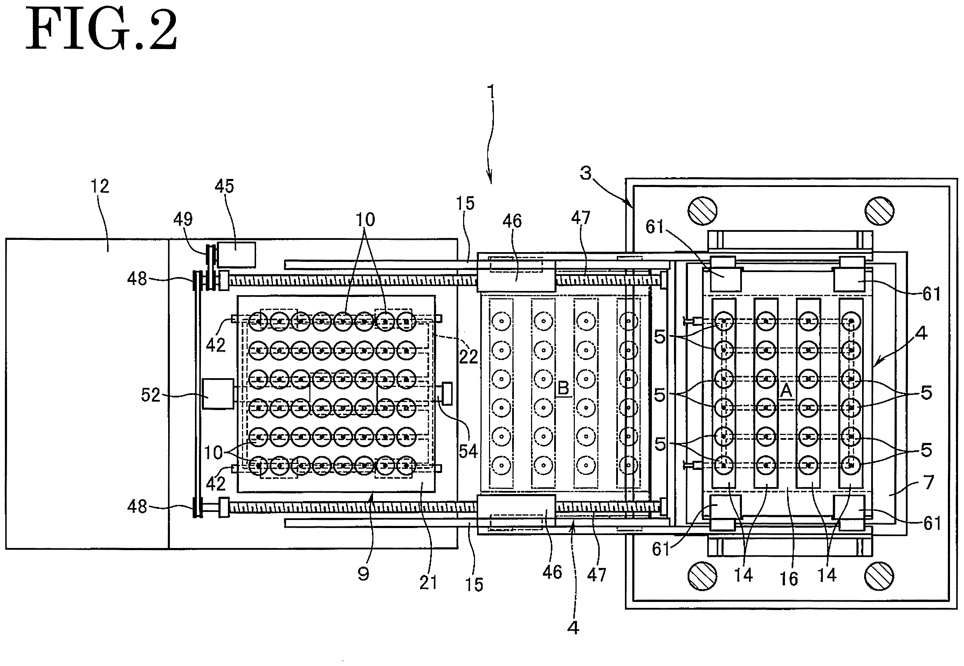

Preform manufacturing equipment will now be described based on Figs. 1 and 2.

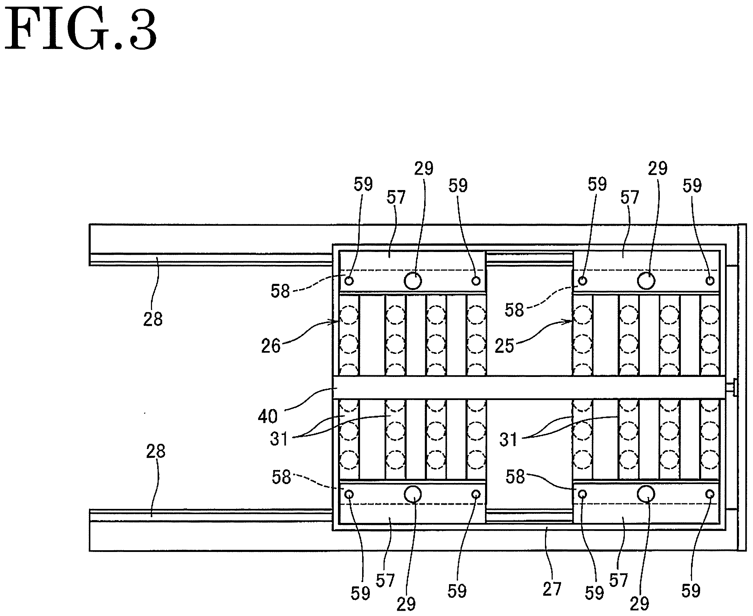

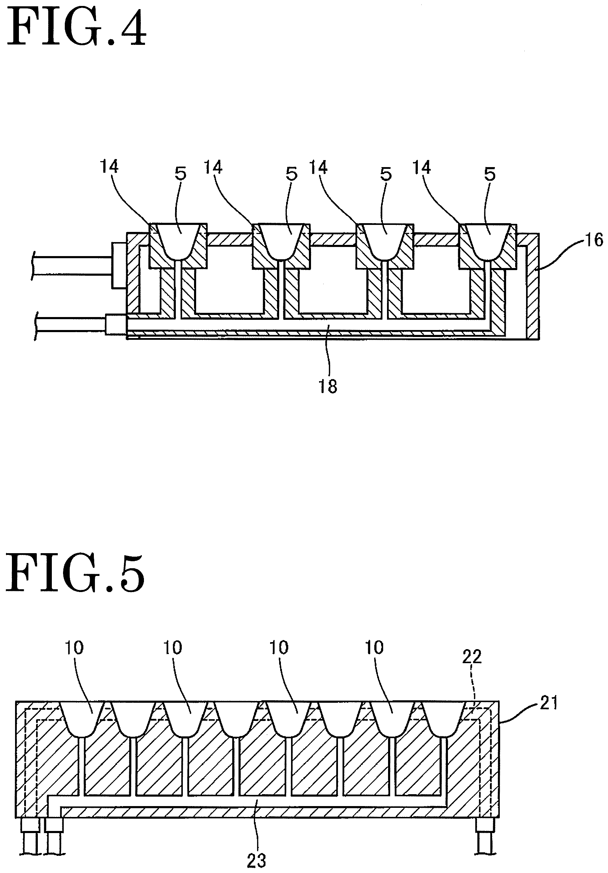

Fig. 1 shows the side of preform manufacturing equipment, representing its entire configuration, according to an embodiment of the present invention. Fig. 2 shows the equipment as viewed along the arrowed line II-II in Fig. 1. Fig. 3 shows the equipment as viewed along the arrowed line III-III in Fig. 1. Fig. 4 shows the details of withdrawing pots. Fig. 5 shows the details of cooling pots.

As shown in Figs. 1 to 3, preform manufacturing equipment 1 is equipped with an injection molding device 3 for molding preforms 2, and the preforms 2 molded by the injection molding device 3 are taken out into withdrawing pots 5 of a withdrawing device 4. When the injection molding device 3 opens molds, the withdrawing device 4 moves from a waiting position B to a receiving position A between an upper mold 6 and a lower mold 7. Neck cavity molds 8a are opened to drop the preforms 2 fitted onto core molds 8, and the preforms 2 are received by the withdrawing pots 5.

A cooling device 9 is provided on a side opposite to the injection molding device 3 across the waiting position B, and cooling pots 10 are provided in the cooling device 9. A conveying device 11 transports the preforms 2 from the withdrawing device 4 located at the waiting position B to the cooling pots 10 of the cooling device 9. In the cooling device 9, water is circulated through a cooling jacket (not shown) to cool the preforms 2 placed in the cooling pots 10.

A discharge section 12, as a transport device for discharging the cooled preforms 2 to the outside of the device by the conveying device 11, is provided on a side opposite to the waiting position B across the cooling device 9. The discharge section 12 may be equipped not only with a chuter, but also with a discharge conveyor for preventing damage, such as scratches, which can occur during the fall of the molded preforms for discharge.

The conveying device 11 for conveying the preforms 2 is provided between the withdrawing device 4 located at the waiting position B and the cooling device 9 and between the cooling device 9 and the discharge section 12. The conveying device 11 is equipped with a first block 25 reciprocating between the withdrawing device 4 located at the waiting position B and the cooling device 9, and a second block 26 reciprocating between the cooling device 9 and the discharge section 12. On a support frame, guide rails (to be described later) are provided for slidably supporting the withdrawing device 4, the cooling device 9, and the conveying device 11, respectively.

The withdrawing device 4 has a withdrawing frame 16 reciprocatably supported by a pair of guide rails 15 extending in a lateral direction in the drawing. A first horizontally moving means 41 is driven to move the withdrawing frame 16, whereupon the withdrawing device 4 reciprocates between the waiting position B and the receiving position A along the transport direction of the preform. The withdrawing frame 16 is provided with, for example, four withdrawing plates 14 extending in a width direction (a direction perpendicular to the sheet face in Fig. 1, a vertical direction in Fig. 2), and each of the withdrawing plates 14 is provided with, for example, six withdrawing pots 5.

The first horizontally moving means 41 includes a ball screw mechanism which is provided on the right and left sides of a machine stand (upper and lower sides in Fig. 2), and which is equipped, for example, with a first electric motor 45 comprising a servo motor, ball nuts 46 fixed to the withdrawing frame 16, and ball screw shafts 47 screwed to the ball nuts 46 and rotated by the first electric motor 45.

Pulleys 48 are provided at the ends of the ball screw shafts 47, a belt is looped between the pulleys 48, and a belt is looped between the pulley 48 and an output pulley 49 of the first electric motor 45. Thus, the rotary motions of the first electric motor 45 are transmitted to the ball screw shafts 47 via the output pulley 49 and the pulleys 48, and the withdrawing frame 16 coupled to the ball nuts 46 horizontally reciprocates along the guide rails 15 on the support frame.

In the present embodiment, the ball screw mechanism is installed on the right and left sides of the machine stand so as not to interfere with the cooling device 9. The servo motor is applied as a drive source for the rotations of the ball screw shafts 47 in order to achieve accurate positioning control efficiently. However, a pneumatic or hydraulic cylinder can be applied, if any of them can exercise positioning control appropriately.

As shown in Fig. 4, a withdrawal/suction means 18 is connected to the withdrawing pots 5 provided on the withdrawing frame 16. When the withdrawing pots 5 move to positions opposing the preforms 2 fitted onto the core molds 8 upon movement of the withdrawing frame 16, the preforms 2 are pulled into the withdrawing pots 5 by the sucking action of the withdrawal/suction means 18, with the result that the preforms 2 are placed in the withdrawing pots 5.

In the case of an ordinary narrow-mouthed preform, the core mold 8 is a vertically elongated nearly rod-shaped one, which plays the role of a guide when the preform leaves the mold and falls. Thus, it is not necessary to regulate the falling posture of the preform. With a wide-mouthed preform 2, however, the core mold 8 is a vertically short nearly bowl-shaped mold, which does not play the role of a guide. For the wide-mouthed preform 2, therefore, the installation of the withdrawal/suction means 18 can be said to be particularly effective.

The inner peripheral surface of the withdrawing pot 5 is of a shape modeled on the outer peripheral surface of the preform 2. Concretely, the inner peripheral surface of the withdrawing pot 5 has a diametrically contracting taper portion corresponding to the barrel part of the preform 2, and a bottom surface portion of a shape mimicking the bottom of the preform 2. If a projecting gate mark remains at the bottom of the preform 2, the preform 2 is inserted into the suction hole of the withdrawing pot 5. Around the withdrawing pot 5, a water cooling circuit (not shown) is provided.

With an injection molding device for a preform, a technique is generally adopted which involves shortening the cooling time for the preform 2 within the injection mold, thereby shortening the injection molding time for the preform 2 to increase production capacity. At the time of release from the injection mold, the surface temperature of the preform 2 is lowered to the glass transition temperature or below, namely, down to about 70°C. However, the interior of the preform 2, particularly the thick-walled barrel part, is still in a state where the temperature is high and a large amount of heat is retained. After mold release, the amount of heat within the preform 2 is transmitted to the surface, and the surface temperature becomes the glass transition temperature or higher. Thus, the shape of the barrel part of the preform 2 easily deforms.

In the present embodiment, the preform 2 placed on the withdrawing device 4 continues to be sucked by the inner peripheral surface of the withdrawing pot 5 for a certain time until transport to the cooling device 9. As a result, deformation possibly occurring in the barrel part of the preform 2 can be suppressed. Furthermore, the preform 2 continues to be cooled by the water cooling circuit (not shown) until it is transported to the cooling device 9. Thus, the cooling time of the preform 2 in the cooling device 9 can be shortened.

Even if the preform 2 is somewhat deformed when placed in the withdrawing pot 5, the deformation can be corrected by the sucking action of the withdrawing pot 5. With the wide-mouthed preform having a large neck portion diameter of, say, 40 mm or more, in particular, the barrel part is thick-walled and is easily deformable. Thus, the suction is even more effective.

The withdrawing device 4 of the present embodiment simultaneously withdraws a plurality of the preforms 2 in a plurality of rows, which have been simultaneously injection molded by the injection molding device 3, while maintaining the row pitch, and enables them to be transported to the cooling device 9 and the discharge section 12. As a result, a mechanism for changing the row pitch becomes unnecessary, so that the plurality of preforms 2 can be efficiently transported to the cooling device 9 and the discharge section 12 in a short time by a simple configuration.

As shown in Fig. 5, the cooling device 9 is provided with a cooling block 21 for holding the cooling pots 10, and the cooling block 21 is provided with a cooling jacket 22 through which cooling water circulates. A cooling/suction means 23 is connected to the cooling pots 10. When the preforms 2 fitted onto the guide cores of the conveying device 11 to be described later oppose the cooling pots 10, the preforms 2 are drawn into the cooling pots 10 by the sucking action of the cooling/suction means 23, whereby the preforms 2 are placed in the cooling pots 10.

Also, under the sucking action of the cooling/suction means 23, the preforms 2 are brought into intimate contact with the inner walls of the cooling pots 10, whereby the preforms 2 are effectively cooled. That is, the preforms 2 can be cooled promptly, with their deformation being suppressed or corrected. This prompt cooling action is particularly effective for the thick-walled wide-mouthed preform.

The cooling block 21 is provided with a sufficient number of the cooling pots 10 to be capable of holding a group of the preforms corresponding to at least two cycles of injection molding. Specifically, a group of the cooling pots for bearing the group of the preforms injection molded first, and a group of the cooling pots for bearing the group of the preforms injection molded next are arranged alternately. That is, the spacing between the cooling pots 10 is a half of the distance between the preforms 2 in each preform group.
It is also possible to provide a large number of the cooling pots 10 enough to be capable of holding a group of the preforms corresponding to three or more cycles of injection molding.

The cooling device 9 is also equipped with a second horizontally moving means 51 which enables the cooling block 21 to reciprocate horizontally along the transport direction of the preforms. The second horizontally moving means 51 in the cooling block 21 includes a ball screw mechanism equipped, for example, with a second electric motor 52 comprising a servo motor, a ball nut 53 fixed to a lower part of the cooling block 21, and a ball screw shaft 54 screwed to the ball nut 53 and connected to and rotated by the second electric motor 52.

By driving the second electric motor 52, the ball screw shaft 54 is rotated, and the cooling block 21 is horizontally reciprocated along guide rails 42 via the ball nut 53 by the rotations of the ball screw shaft 54. Since the cooling block 21 is reciprocated, the preforms 2 can be transferred at a plurality of positions to the cooling block 21 in a space-saving manner, even when the distance between the respective blocks of the conveying device 11 is constant. Besides, the reciprocations take place over a short distance, and the relevant structure is simple. Thus, the preforms 2 can be transported in a short time with high efficiency. Moreover, with a space saving being achieved, many of the preforms 2 can be simultaneously accommodated in and cooled by the cooling block 21.

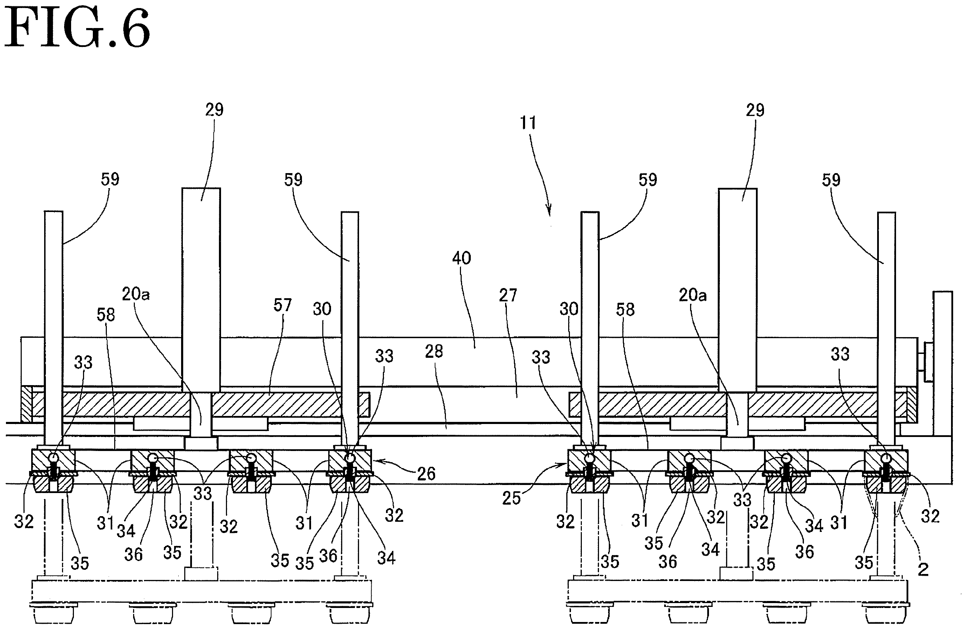

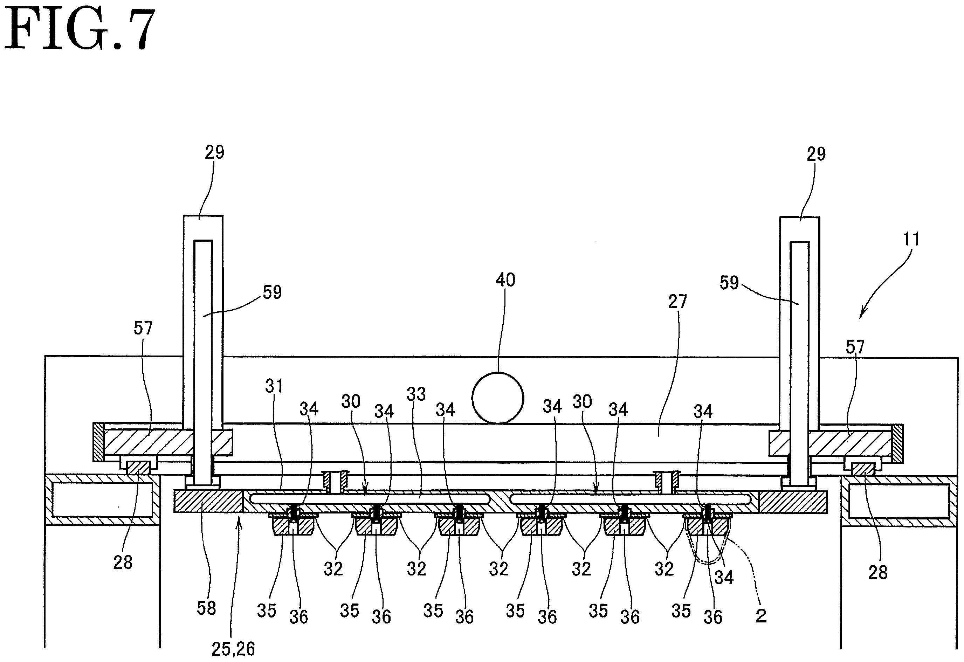

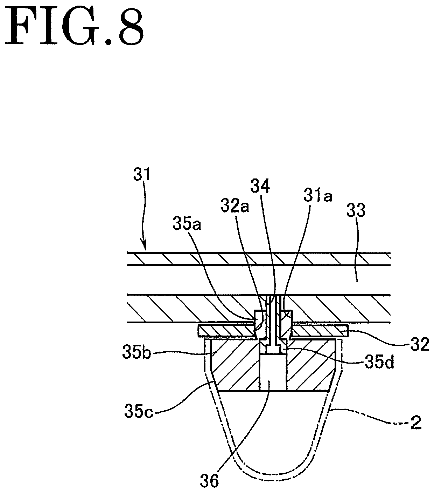

The conveying device 11 will be explained concretely based on Figs. 6 to 8. Fig. 6 shows a side representing the details of the conveying device 11. Fig. 7 shows a section representing the details of a moving frame. Fig. 8 shows the detailed status of essential parts in Fig. 7.

As shown in Fig. 6, the conveying device 11 is composed of the first block 25 and the second block 26, and the first block 25 and the second block 26 are provided on a conveyance frame 27 via support blocks 57. The support blocks 57 are movable while being guided by guide rails 28 on the support frame, and are reciprocated along the guide rails 28 by a drive cylinder 40. The first block 25 and the second block 26 are provided to be ascendable and descendable relative to the conveyance frame 27, and the first block 25 and the second block 26 are moved up and down by hoisting cylinders 29.

In each of the first block 25 and the second block 26, for example, four moving frames 31 are provided to extend in a width direction (a direction perpendicular to the sheet face in Fig. 6) with respect to a frame body 58, and the moving frame 31 is provided with, for example, six sealing disks 32. The body of the hoisting cylinder 29 is fixed to the support block 57, and the leading end of a drive rod 20a of the hoisting cylinder 29 is fixed to the frame body 58. By driving the hoisting cylinder 29, the drive rod 20a is extended, whereupon the frame body 58 and the four moving frames 31 move downward (as indicated by dotted lines in Fig. 6). The numeral 59 is a guide bar provided to be movable relative to the support block 57.

The material for the sealing disk 32 is selected from resins capable of airtight sealing with the top surface of the opening of the preform 2, for example, polyurethanes and polyamides. At the center of the sealing disk 32 is provided a through-hole 32a for insertion of the leading end of a guide core 35 to be described later (see Fig. 8). The diameter of the through-hole 32a is larger than the leading end of the guide core 35 by a value of the order of 1 mm to 3 mm. Thus, the sealing disk 32 is laterally swingable, although slightly, with respect to the guide core 35. The shape of the sealing disk 32 is a shape conformed to the opening of the preform 2 (circular, in many cases), and its thickness is set at a thickness which does not allow the portion holding the preform 2 to warp, for example, at a value of the order of 2 mm to 3 mm.

The moving frame 31 is equipped with intake/exhaust means 30 as a close contact means, and the interior of the preform 2 is reduced in pressure by the intake/exhaust means 30, with the sealing disk 32 covering the opening side of the preform 2. Upon pressure reduction of the interior of the preform 2, the top surface of the opening of the preform 2 closely contacts the sealing disk 32, and the preform 2 is held by the moving frame 31.

As shown in Fig. 7, a vacuum path 33 is formed at a central site in the longitudinal direction (a direction perpendicular to the sheet face in Fig. 6) of the moving frame 31, and six passage holes 34 are provided in a part of the moving frame 31 below the vacuum path 33. The guide core 35, onto which the inner site of the opening of the preform 2 is fitted, is fixed in the passage hole 34 (the surface opposing the opening of the preform 2). Between the guide core 35 and the lower surface of the moving frame 31, the sealing disk 32 is swingably supported with a clearance (for example, of the order of 1 mm).

As shown in Fig. 8, the guide core 35 is composed of a base end portion 35a fitted into a hole 31a provided in the moving frame 31, a flange portion 35b supporting the sealing disk 32, a leading end portion 35c forming a reduced diameter taper, and a communication hole 36 accommodating a perforated fixing member 35d (e.g., a hexagon head bolt) located at the center of the lead end portion for coupling the guide core 35 to the moving frame 31.

In order to make the swing of the sealing disk 32 more reliable, the shape of the base end portion 35a may be such that a reduced diameter taper portion or a concave groove may be provided near the site of junction with the flange portion 35b. To make the guide core 35 lightweight, moreover, a cylindrical concave groove may be provided in the inner surface of the flange portion 35b excluding a central part and an end part on which the sealing disk 32 can be placed. The presence of this guide core 35 enables the top surface of the opening of the preform 2 and the sealing disk 32 to approach, while guiding the preform 2 to an appropriate position.

It is also possible to provide only the sealing disk 32 swingably on the moving frame 31, without providing the guide core 35. Moreover, the sealing disk 32 can be fixed to the moving frame 31. In this mode, the member for the guide core 35 is not necessary, and thus advantages are obtained in terms of maintenance and cost. Nor is registration between the guide core 35 and the cooling pot 10 required, and there can be no accident of damage due to contact between the guide core 35 and the cooling pot 10. In these respects as well, advantages can be said to exist.

The communication hole 36 is provided at the center of the guide core 35, and the communication hole 36 communicates with the vacuum path 33 via the passage hole 34 (fixing screw). Since the guide core 35 is fitted to the inner site of the opening of the preform 2, a flat part of the top surface of the opening of the preform 2 is covered with the periphery of the sealing disk 32. In this state, evacuation is performed through the vacuum path 33. As a result, the interior of the preform 2 is evacuated from the outside of the sealing disk 32 to create a vacuum state (exhaust means), whereby the opening of the preform 2 is brought into intimate contact with the sealing disk 32.

The sealing disk 32 is swingably supported, with a clearance, between the guide core 35 and the lower surface of the moving frame 31. Thus, when the interior of the preform 2 is evacuated, with the preform 2 being fitted on the guide core 35, the sealing disk 32 swings according to the posture of the preform 2. Consequently, the preform 2 does not deform, and the flat part of the top surface of the opening of the preform 2 can be reliably brought into intimate contact with the sealing disk 32, regardless of the posture of the preform 2.

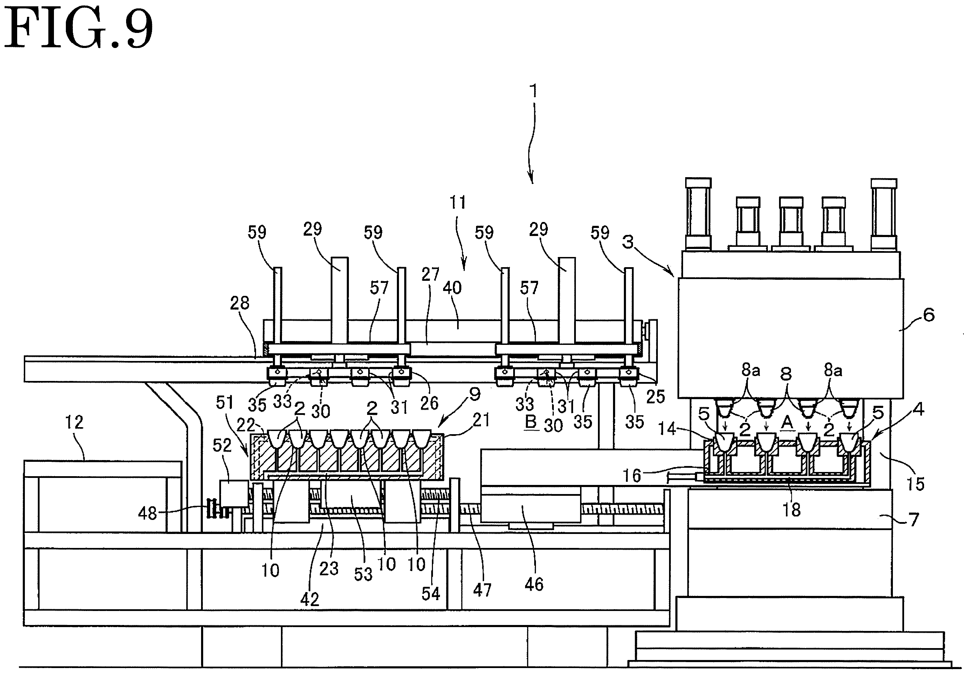

The operating states of the preform manufacturing equipment 1 in the above-mentioned configuration will be described based on Figs. 9 to 14. Figs. 9 to 14 illustrate the operating states of the preform manufacturing equipment 1 over time. In Fig. 9 showing the initial operating state, the preforms 2 are cooled by and accommodated in all the cooling pots 10 of the cooling block 21.

As shown in Fig. 9, after the preforms 2 are molded by the injection molding device 3, the upper mold 6 ascends for mold opening, with the preforms 2 being fitted onto the core molds 8 and the neck cavity molds 8a. At this time, the first block 25 and the second block 26 of the conveying device 11 do not hold the preforms 2, but wait at the ascending position so as not to interfere with the withdrawing device 4 and the cooling device 9.

The withdrawing device 4 is moved by the first horizontally moving means 41 to the receiving position A between the upper mold 6 and the lower mold 7, whereupon the withdrawing pots 5 move to the positions opposing the preforms 2 fitted onto the core molds 8 and the neck cavity molds 8a. In this state, the neck cavity molds 8a are opened to release the fitted preforms 2. The preforms 2 are drawn into the withdrawing pots 5 by the sucking action of the withdrawal/suction means 18, and the preforms 2 are placed in the withdrawing pots 5. The preforms 2 placed in the withdrawing pots 5 are each in a state in which the barrel part is closely contacted by, and inserted into, the inner surface of the withdrawing pot 5 by the sucking action, while only the neck part is exposed.

In order to receive the preforms 2 more reliably, hoisting devices 61 such as air cylinders, which raise or lower the withdrawing pots 5, can be provided on the withdrawing device 4 (see Fig. 2). In this case, after the withdrawing pots 5 are raised and brought close to the core molds 8, suction treatment is performed. Thus, the preforms 2 can be placed on the withdrawing pots 5 more reliably.

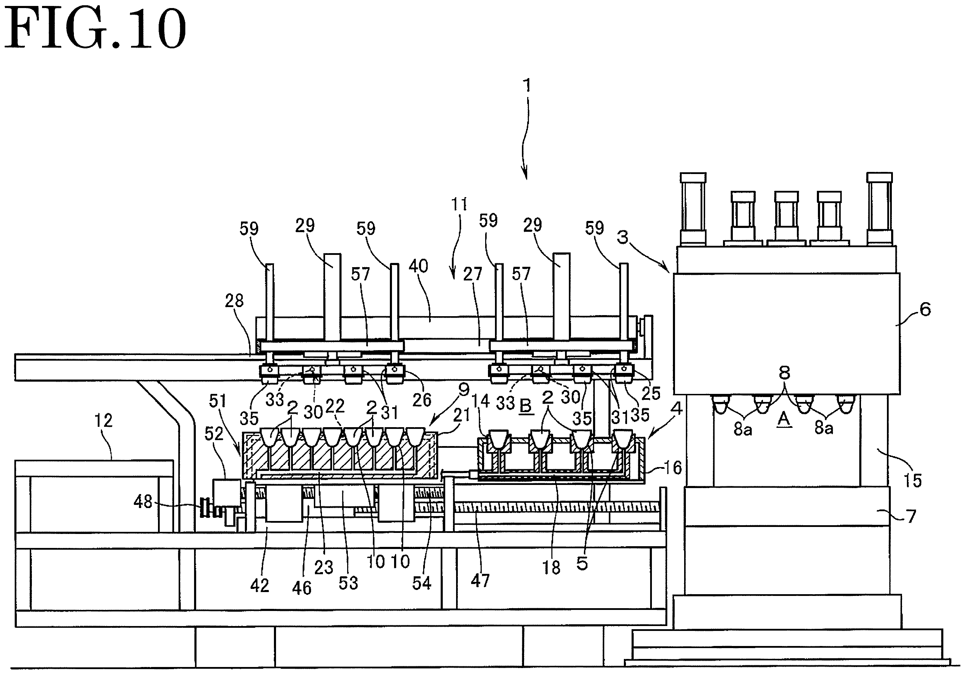

As shown in Fig. 10, the withdrawing device 4 moves to the waiting position B, with the preforms 2 being placed on the withdrawing pots 5. On the cooling pots 10 of the cooling device 9, the preforms 2 are placed in a sucked state, and cooled.

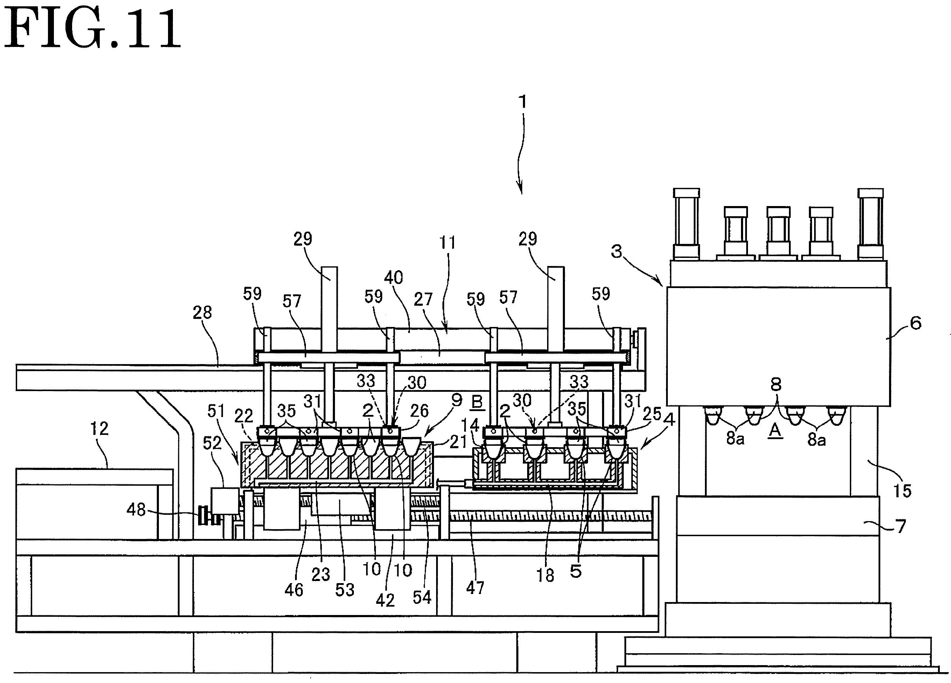

As shown in Fig. 11, the first block 25 and the second block 26 of the conveying device 11 are lowered, and suction by the withdrawing pots 5 and the cooling pots 10 is released. Moreover, the interior of the preform 2 is reduced in pressure by the intake/exhaust means 30 to bring the opening of the preform 2 into intimate contact with the sealing disk 32, and the preform 2 is held by the moving frame 31. On this occasion, the second block 26 holds the first group of the preforms which has continued to be cooled during two cycles of injection molding.

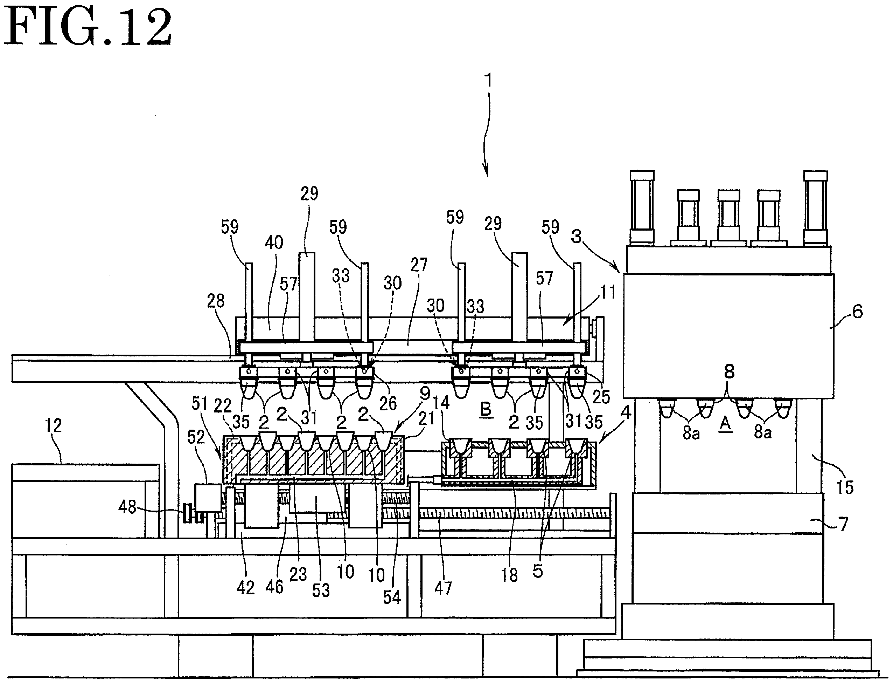

As shown in Fig. 12, the first block 25 and the second block 26 of the conveying device 11 are raised, with the preforms 2 being held by the moving frames 31 (sealing disks 32).

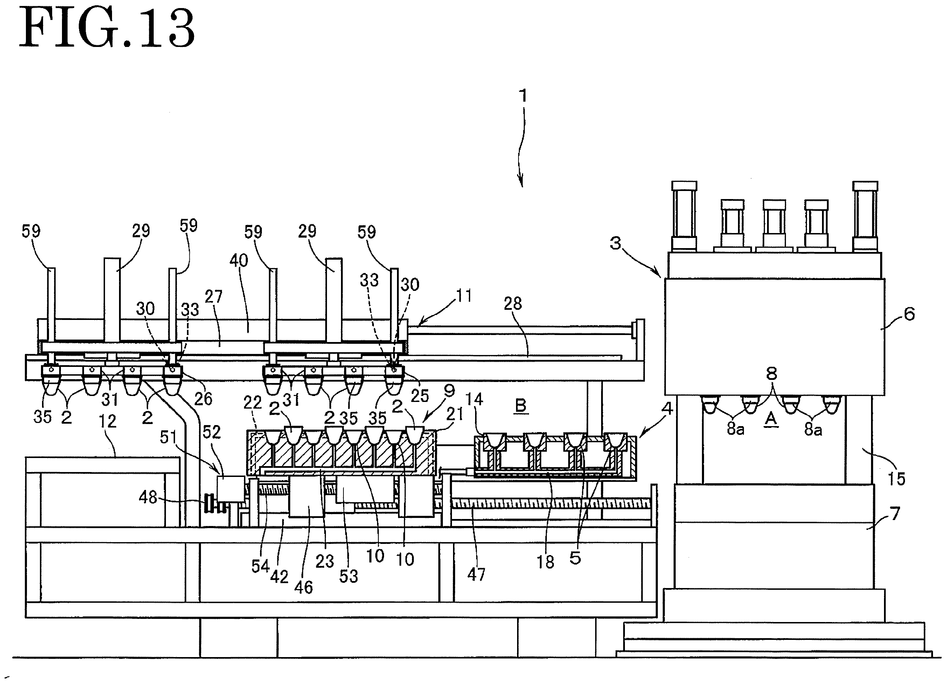

As shown in Fig. 13, the conveyance frame 27 moves. In accordance with the movement of the conveyance frame 27, the first block 25 moves from the position of the withdrawing device 4 located at the waiting position B to the position of the cooling pots 10 of the cooling device 9 having accommodated the group of the preforms held by the second block, while the second block 26 moves from the position of the cooling device 9 to the position of the discharge section 12.

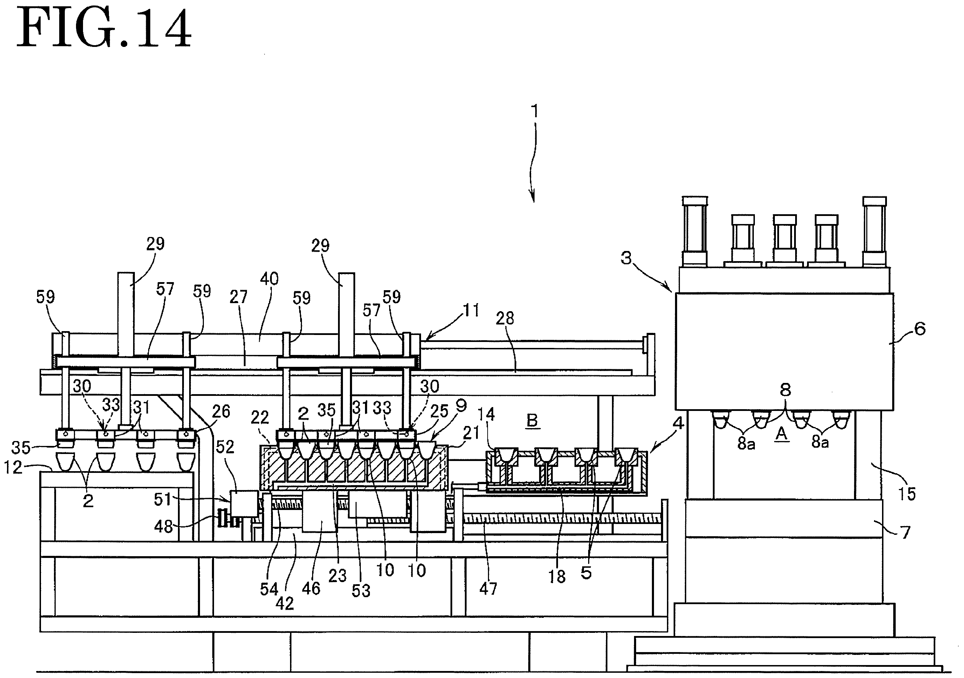

As shown in Fig. 14, the first block 25 and the second block 26 of the conveying device 11 are lowered. The vacuum inside the preforms 2 by the intake/exhaust means 30 of the first block 25 is released, and the preforms 2 are sucked toward the cooling pots 10 by the cooling/suction means 23, and placed in and closely contacted with the cooling pots 10. Furthermore, the vacuum inside the preforms 2 by the intake/exhaust means 30 of the second block 26 is released, and the preforms 2 are discharged to the discharge section 12.

Then, the first block 25 and the second block 26 of the conveying device 11 are raised and returned to the original position, while the withdrawing device 4 is placed in a state where it has been moved to the waiting position B. At this time, the cooling block 21 is moved by a predetermined pitch toward the discharge section 12 by the second horizontally moving means 51 to change the position of the cooling pots 10, which are to accommodate the preforms 2, by a dimension corresponding to one cooling pot 10. During this process, the injection molding device 3 completes a next cycle of injection molding and is ready to release the preforms 2 from the molds, whereas the withdrawing device 4 is moved to the withdrawing position A by the driving of the first horizontally moving means 41.

Then, the preforms 2 are likewise conveyed to the discharge section 12 and the cooling pots 10. At a time when this cycle is completed, the cooling block 21 is moved by the predetermined pitch toward the injection molding device 3 by the second horizontally moving means 51, and thereby returned to the original position. By this procedure, the injection molding, cooling and discharge of the preforms 2 can be performed continuously. The cooling block 21 can hold a group of the preforms corresponding to 3 cycles or more of injection molding. In this case, the movements over the predetermined pitch are increased by one step or more, but the preforms can be cooled more efficiently.

With the conveying device 11 in the above-described preform manufacturing equipment 1, the opening side of the preform 2 is covered with the sealing disk 32, and the interior of the preform 2 is evacuated to bring the preform 2 into intimate contact with the sealing disk 32, thereby holding the preform 2 to the moving frame 31. Even the wide-mouthed preform 2 having a wide opening, therefore, can appropriately be held to the moving frame 31, without the use of a gripping mechanism having a great gripping force.

Furthermore, the sealing disk 32 is swingably supported by the moving frame 31. Thus, even when there are variations in the posture of the preform 2 relative to the moving frame 31, for example, even when the preform 2 is tilting, the preform 2 can be reliably held in close contact with the sealing disk 32 owing to the swing of the sealing disk 32.

According to the preform manufacturing equipment 1 equipped with the conveying device 11, the preform 2 having the opening with the flat top surface can be appropriately held and conveyed between the withdrawing device 4 and the cooling device 9 and between the cooling device 9 and the discharge section 12. Since the preforms 2 are drawn toward the withdrawing pots 5 and the cooling pots 10 by suction and placed thereon, moreover, the preforms 2 can be received reliably. Besides, the preforms 2 can be cooled efficiently upon close contact with the cooling pots 10.

### Industrial Applicability

The present invention can be utilized in the industrial fields of a conveying device for an injection molded preform, and preform manufacturing equipment.

### Explanations of Letters or Numerals

1 Preform manufacturing equipment
2 Preform
3 Injection molding device
4 Withdrawing device
5 Withdrawing pot
6 Upper mold
7 Lower mold
8 Core mold
9 Cooling device
10 Cooling pot
11 Conveying device
12 Discharge section
14 Withdrawing plate
15 Guide rail
16 Withdrawing frame
18 Withdrawal/suction means
21 Cooling block
22 Cooling jacket
23 Cooling/suction means
25 First block
26 Second block
27 Conveyance frame
28 Guide rail
29 Hoisting cylinder
30 Intake/exhaust means
31 Moving frame
32 Sealing disk
33 Vacuum path
34 Passage hole
35 Guide core
36 Communication hole
40 Drive cylinder
41, 51 Horizontally moving means
42, 43 Guide rail
45, 52 Electric motor
46, 53 Ball nut
47, 54 Ball screw shaft
48 Pulley
49 Output pulley
57 Support block
58 Frame body
61 Hoisting device

## Claims

1. A preform conveying device (11) for conveying a preform (2) having an opening, comprising:
- a moving frame (31) moved for positioning to a predetermined position;
- a sealing disk (32) supported by the moving frame (31) for covering an opening side of the preform (2); and
- close contact means for reducing a pressure of an interior of the preform (2), with the sealing disk (32) covering the opening side of the preform (2), to bring the preform (2) into close contact with the sealing disk (32), thereby holding the preform (2) to the moving frame (31),
wherein the close contact means is an evacuation means which evacuates the interior of the preform (2) from outside the sealing disk (32) via the moving frame (31) to establish a state of reduced pressure,
**characterized in that**
the sealing disk (32) is swingably supported by the moving frame (31).

2. The preform conveying device (11) according to claim 1,
**characterized in**
**that** a guide core (35) fitted into the opening of the preform (2) is provided on a surface of the sealing disk (32) opposing the opening of the preform (2).

3. Preform manufacturing equipment (1), comprising:
- a withdrawing device (4) for withdrawing a preform (2) injection molded by an injection molding device (3);
- a cooling device (9) for cooling the preform (2) withdrawn by the withdrawing device (4);
- a discharge device for discharging the preform (2) cooled by the cooling device (9) to an outside; and
- the preform conveying device (11) according to any one of claims 1 to 2 which is configured to convey the preform (2) from the withdrawing device (4) to the cooling device (9) and from the cooling device (9) to the discharge device.

4. The preform manufacturing equipment (1) according to claim 3,
**characterized in**
**that** the withdrawing device (4) has a withdrawing pot (5) on which the preform (2) held to a core of the injection molding device is placed, and
the withdrawing pot (5) is equipped with withdrawal/suction means (18) for drawing in the preform (2) held to the core.

5. The preform manufacturing equipment (1) according to claim 4,
**characterized in**
**that** the cooling device (9) has a cooling pot (10) on which the preform (2) conveyed by the preform conveying device (11) is placed, and
the cooling pot (10) is equipped with cooling/suction means (23) for drawing in the preform (2) held to the sealing disk (32) of the preform conveying device (11), and for bringing the preform (2) into close contact with the cooling pot (10).

## Patentansprüche

1. Vorform-Fördervorrichtung (11) zum Fördern einer Vorform (2) mit einer Öffnung, mit:
- einem Bewegungsrahmen (31), welcher zum Positionieren zu einer vorgegebenen Position bewegbar ist,
- einer Dichtungsscheibe (32), welche durch den Bewegungsrahmen (31) zum Abdecken einer Öffnungsseite der Vorform (2) gehalten ist, und
- einer Anlegeeinrichtung zum Reduzieren eines Druckes eines Inneren der Vorform (2), wobei zum Anlegen der Vorform (2) an die Dichtungsscheibe (32 die Dichtungsscheibe (32) die Öffnungsseite der Vorform (2) abdeckt, wodurch die Vorform (2) an dem Bewegungsrahmen (31) gehalten ist,
wobei die Anlegeeinrichtung eine Vakuumeinrichtung ist, welche das Innere der Vorform (2) von außerhalb der Dichtungsscheibe (32) über den Bewegungsrahmen (31) evakuiert, um einen Unterdruckzustand zu erzeugen,
**dadurch gekennzeichnet,**
**dass** die Dichtungsscheibe (32) durch den Bewegungsrahmen (31) pendelnd gehalten ist.

2. Vorform-Fördervorrichtung (11) nach Anspruch 1,
**dadurch gekennzeichnet,**
**dass** ein Führungskern (35) passend in die Öffnung der Vorform (2) an einer Oberfläche der Dichtungsscheibe (32) vorgesehen ist, welche der Öffnung der Vorform (2) gegenüberliegt.

3. Vorform-Herstellungsanlage (1) mit:
- einer Entnahmevorrichtung (4) zum Entnehmen einer Vorform (2), welche durch eine Spritzgießvorrichtung (3) spritzgegossen ist,
- einer Kühlvorrichtung (9) zum Kühlen der Vorform (2), welche durch die Entnahmevorrichtung (4) entnommen wurde,
- einer Ausgabevorrichtung zum Ausgeben der durch die Kühlvorrichtung (9) gekühlten Vorform (2) an einer Außenseite, und
- die Vorform-Fördervorrichtung (11) nach Anspruch 1 oder 2, welche ausgebildet ist, die Vorform (2) von der Entnahmevorrichtung (4) zu der Kühlvorrichtung (9) und von der Kühlvorrichtung (9) zu der Ausgabevorrichtung zur fördern.

4. Vorform-Herstellungsanlage (1) nach Anspruch 3,
**dadurch gekennzeichnet,**
**dass** die Entnahmevorrichtung (4) einen Entnahmenapf (5) aufweist, an welchem die von einem Kern der Spritzgießvorrichtung gehaltene Vorform (2) angeordnet wird, und
der Entnahmenapf (5) mit einer Entnahme-/ Saugeinrichtung (18) zum Einziehen der an dem Kern gehaltenen Vorform (2) ausgestattet ist.

5. Vorform-Herstellungsanlage (1) nach Anspruch 4,
**dadurch gekennzeichnet,**
**dass** die Kühlvorrichtung (9) einen Kühlnapf (10) aufweist, an welchem die von der Vorform-Fördervorrichtung (11) geförderte Vorform (2) angeordnet wird, und der Kühlnapf (10) mit einer Kühl-/ Saugeinrichtung (23) ausgestattet ist, um die durch die Dichtungsscheibe (32) der Vorform-Fördervorrichtung (11) gehaltene Vorform (2) einzuziehen und die Vorform (2) an den Kühlnapf (10) anzulegen.

## Revendications

1. Dispositif de transport de préforme (11) pour transporter une préforme (2) ayant une ouverture, comprenant :
- un cadre mobile (31) déplacé pour être positionné à une position prédéterminée ;
- un disque d'étanchéité (32) supporté par le cadre mobile (31) pour recouvrir un côté d'ouverture de la préforme (2) ; et
- un moyen de contact étroit pour réduire une pression d'un intérieur de la préforme (2), avec le disque d'étanchéité (32) recouvrant le côté d'ouverture de la préforme (2), pour amener la préforme (2) en contact étroit avec le disque d'étanchéité (32), maintenant ainsi la préforme (2) contre le cadre mobile (31),
dans lequel le moyen de contact étroit est un moyen d'évacuation qui évacue l'intérieur de la préforme (2) à partir de l'extérieur du disque d'étanchéité (32) par l'intermédiaire du cadre mobile (31) pour établir un état de pression réduite,
**caractérisé en ce que**
le disque d'étanchéité (32) est supporté de manière pivotante par le cadre mobile (31).

2. Dispositif de transport de préforme (11) selon la revendication 1,
**caractérisé en ce**
**qu'**un coeur de guidage (35) ajusté dans l'ouverture de la préforme (2) est fourni sur une surface du disque d'étanchéité (32) à l'opposer de l'ouverture de la préforme (2).

3. Équipement de fabrication de préforme (1), comprenant :
- un dispositif de retrait (4) pour retirer une préforme (2) moulée par injection par un dispositif de moulage par injection (3) ;
- un dispositif de refroidissement (9) pour refroidir la préforme (2) retirée par le dispositif de retrait (4) ;
- un dispositif de décharge pour décharger la préforme (2) refroidie par le dispositif de refroidissement (9) vers un extérieur ; et
- le dispositif de transport de préforme (11) selon l'une quelconque des revendications 1 à 2 qui est configuré pour transporter la préforme (2) du dispositif de retrait (4) au dispositif de refroidissement (9) et du dispositif de refroidissement (9) au dispositif de décharge.

4. Équipement de fabrication de préforme (1) selon la revendication 3,
**caractérisé en ce**
**que** le dispositif de retrait (4) a un pot de retrait (5) sur lequel la préforme (2) maintenue contre un coeur du dispositif de moulage par injection est placée, et
le pot de retrait (5) est équipé d'un moyen de retrait/aspiration (18) pour attirer la préforme (2) maintenue contre le coeur.

5. Équipement de fabrication de préforme (1) selon la revendication 4,
**caractérisé en ce**
**que** le dispositif de refroidissement (9) a un pot de refroidissement (10) sur lequel la préforme (2) transportée par le dispositif de transport de préforme (11) est placée, et le pot de refroidissement (10) est équipé d'un moyen de refroidissement/aspiration (23) pour attirer la préforme (2) maintenue contre le disque d'étanchéité (32) du dispositif de transport de préforme (11), et pour amener la préforme (2) en contact étroit avec le pot de refroidissement (10).
